# EUROPÄISCHE PATENTSCHRIFT

(11) **EP 3 122 598 B1**
(45) Veröffentlichungstag und Bekanntmachung des Hinweises auf die Patenterteilung: **10.10.2018**
(21) Anmeldenummer: 15723827.0
(22) Anmeldetag: 27.03.2015
(51) Int. Cl.: B60R 13/00, B60R 21/216, B60R 21/2165, B60R 21/215

(54) **EMBLEM FÜR EIN GASSACKMODUL, GASSACKMODUL UND LENKRAD MIT EINEM DERARTIGEN EMBLEM**
EMBLEM FOR AN AIRBAG MODULE, AIRBAG MODULE AND STEERING WHEEL WITH SUCH AN AIRBAG MODULE
EMBLÈME POUR MODULE DE COUSSIN À GAZ, MODULE DE COUSSIN À GAZ ET VOLANT DE DIRECTION COMPORTANT UN TEL EMBLÈME

(30) Priorität: 27.03.2014 DE 202014002659 U
(43) Veröffentlichungstag der Anmeldung: 01.02.2017
(73) Patentinhaber: Dalphi Metal España, S.A., 36213 Vigo (ES)
(72) Erfinder: MOURE FERNÁNDEZ, Marcelino, 36350 Nigrán (ES); JONIETZ, Andreas, Maria, Joachim, 36204 Vigo (ES); PAJON FUSTES, Enrique, 36208 Vigo (ES); BAÑA CASTRO, Ramon, 36208 Vigo (ES)
(74) Vertreter: ZF TRW Patentabteilung
(86) Internationale Anmeldenummer: PCT/EP2015/000658
(87) Internationale Veröffentlichungsnummer: WO 2015/144313

(56) Entgegenhaltungen:
- EP-A2- 0 899 170
- DE-U1-202010 005 541
- US-A1- 2009 317 571

## Beschreibung

Die Erfindung betrifft ein Emblem für ein Gassackmodul gemäß dem Oberbegriff des Anspruchs 1. Ferner betrifft die Erfindung ein Gassackmodul, insbesondere ein Fahrerairbagmodul, sowie ein Lenkrad mit einem derartigen Emblem.

Ein Emblem der eingangs genannten Art ist beispielsweise aus EP 0 899 170 B1 bekannt. Das bekannte Emblem weist mehrere Stegelemente auf, die gemeinsam eine Logo-Struktur bilden. Die einzelnen Stegelemente umfassen Stifte, die zur Befestigung des Emblems in einer Airbagabdeckung geeignet sind. Nachteilig bei dem bekannten Emblem ist, dass einzelne, voneinander optische getrennte Logo-Elemente, beispielsweise Buchstaben, separat mit der Airbagabdeckung zu verbinden sind. Dies erhöht den Montageaufwand für das Emblem. Wenn das Emblem aus einzelnen Elementen gebildet ist, beispielsweise aus einzelnen Buchstaben, ist außerdem eine exakte Ausrichtung der einzelnen Emblem-Bestandteile zueinander erforderlich.

Die Aufgabe der Erfindung besteht darin, ein Emblem anzugeben, das eine einfache Montage ermöglicht. Ferner besteht die Aufgabe der Erfindung darin, ein Gassackmodul und ein Lenkrad mit einem solchen Emblem anzugeben.

Erfindungsgemäß wird diese Aufgabe im Hinblick auf das Emblem durch den Gegenstand des Anspruchs 1, im Hinblick auf das Gassackmodul durch den Gegenstand des Anspruchs 10, im Hinblick auf das Lenkrad durch den Gegenstand des Anspruchs 14 gelöst.

Die Erfindung beruht auf dem Gedanken, ein Emblem für ein Gassackmodul mit einem inneren Dekorationselement und einem äußeren Dekorationselement anzugeben, das mit dem inneren Dekorationselement über Stege verbunden ist. Das innere Dekorationselement und das äußere Dekorationselement sind in einem montierten Zustand am Gassackmodul sichtbar. Wenigstens zwischen dem inneren Dekorationselement und dem äußeren Dekorationselement ist erfindungsgemäß ein Füllelement angeordnet, das die Stege verdeckt.

Indem zwischen dem inneren Dekorationselement und dem äußeren Dekorationselement ein Füllelement angeordnet ist, das die Stege verdeckt, wird auf einfache Weise der Eindruck für den Betrachter vermittelt, dass sich das Emblem aus zwei voneinander getrennten dekorativen Elementen zusammensetzt. Gleichzeitig ist jedoch die Montage des gesamten Emblems vereinfacht, da das Emblem eine einheitliche bzw. gemeinsame Baugruppe bildet. Mit anderen Worten kann das Emblem als eine einheitliche Baugruppe an einem Gassackmodul montiert werden, obwohl im montierten Zustand für den Betrachter zwei voneinander optisch getrennte Dekorationselemente erkennbar sind. Die Erfindung erhöht somit die Gestaltungsvielfalt von Emblemen bei gleichzeitiger Reduktion des Montageaufwands.

Bei einer bevorzugten Ausführungsform der Erfindung weist das Füllelement eine Vorderseite und eine Rückseite auf, wobei die Vorderseite im montierten Zustand am Gassackmodul sichtbar ist und die Stege entlang der Rückseite verlaufen. Die Rückseite verläuft vorzugsweise parallel zur Vorderseite des Füllelements. Im montierten Zustand kann die Rückseite beispielsweise einem Aufnahmeraum für einen Gassack in einem Gassackmodul zugewandt sein. Die Vorderseite kann im montierten Zustand des Emblems hingegen einem Fahrzeuginsassen zugewandt sein. Für den Fahrzeuginsassen sind am Emblem daher nur die Dekorationselemente und die Vorderseite des Füllelements sichtbar. Die Stege, die entlang der Rückseite des Füllelements verlaufen, sind im montierten Zustand des Emblems nicht erkennbar. Die Anordnung der Stege auf der Rückseite des Füllelements erleichtert die Herstellung des Emblems.

Das Füllelement kann ferner wenigstens eine Aussparung aufweisen, in der das Dekorationselement angeordnet ist. Die Aussparung kann insbesondere einem Negativprofil des inneren Dekorationselements entsprechen. Das innere Dekorationselement kann sich also durch das Füllelement hindurch erstrecken, um so an der Vorderseite des Füllelements sichtbar zu werden. Das Füllelement kann beispielsweise eine Platte sein, die eine Öffnung aufweist, durch die sich das innere Dekorationselement (beispielsweise ein Fahrzeugherstellerlogo) hindurch erstreckt. Um ein einheitliches Erscheinungsbild des Emblems zu erreichen, kann vorgesehen sein, dass die Aussparung der Form des inneren Dekorationselements entspricht. Die Aussparung weist also eine Form auf, die mit dem inneren Dekorationselement deckungsgleich ist, so dass das innere Dekorationselement passgenau in das Füllelement eingebettet werden kann.

Das äußere Dekorationselement kann sich hingegen entlang eines Außenrands des Füllelements erstrecken. Eine solche Anordnung des äußeren Dekorationselements ist aus optischen Gründen vorteilhaft. Insgesamt wirkt so das Erscheinungsbild des Emblems vergleichsweise hochwertig.

In einer weiteren bevorzugten Ausgestaltung der Erfindung ist vorgesehen, dass das innere Dekorationselement eine andere Farbe und/oder Lackierung und/oder Beschichtung als das äußere Dekorationselement aufweist. Da die Dekorationselemente voneinander getrennt und durch die im montierten Zustand verdeckten Stege miteinander gekoppelt sind, ist es einfach möglich, dem inneren Dekorationselement und dem äußeren Dekorationselement unterschiedliche Farben, Lackierungen und/oder Beschichtungen zuzuweisen. Beispielsweise kann das innere Dekorationselement ein Fahrzeugherstellerlogo umfassen, das in einer bevorzugten Herstellerfarbe lackiert wird. Das äußere Dekorationselement kann hingegen verchromt sein.

Im Allgemeinen können das innere Dekorationselement, das äußere Dekorationselement und die Stege einstückig miteinander verbunden bzw. einteilig miteinander ausgebildet sein. Die einteilige Ausbildung des inneren Dekorationselements, des äußeren Dekorationselements und der Stege erleichtert die Herstellung des Emblems und erhöht die Effizienz im Produktionsprozess.

Die Stege können mit dem Füllelement verbunden sein. Insbesondere können die Stege mit dem Füllelement schweißverbunden oder klippverbunden sein. Konkret ist vorgesehen, die Stege bzw. die Stege und die mit den Stegen einstückig ausgebildeten Dekorationselemente fest mit dem Füllelement zu verbinden. Die feste Verbindung erleichtert die Handhabung des Emblems bei der Montage.

Das Emblem kann ferner wenigstens eine Sollbruchlinie aufweisen, die sich durch das Füllelement und wenigstens das äußere Dekorationselement erstreckt. Das Emblem ist in bevorzugter Weise zur Anbringung auf Gassackmodul-Abdeckungen geeignet. Derartige Gassackmodul-Abdeckungen werden bei Auslösung des Gassacks aufgesprengt und können sich beispielsweise entlang von Sollbruchlinien auftrennen. Die Sollbruchlinie im hier beschriebenen Emblem ermöglicht es, dass das Emblem ebenfalls aufreißt und einem Öffnen des Gassackmoduls nicht im Wege steht. Durch die Sollbruchlinie im Emblem wird ebenfalls erreicht, dass das Emblem vergleichsweise groß gestaltet werden kann, ohne eine Sollbruchlinie der Gassackmodul-Abdeckung zu blockieren.

Das Emblem kann im Allgemeinen mit einer Abdeckung eines Gassackmoduls verbindbar sein. Alternativ kann das Emblem auch eine Abdeckung eines Gassackmoduls bilden. Mit anderen Worten kann das Füllelement die Grundform einer Gassackmodul-Abdeckung zeigen, wobei zusätzlich die Dekorationselemente vorgesehen sind, um der Gassack-Abdeckung ein ansprechendes optisches Erscheinungsbild zu verleihen.

Gemäß einem nebengeordneten Aspekt beruht die Erfindung auf dem Gedanken, ein Gassackmodul, insbesondere Fahrerairbagmodul, mit einem zuvor beschriebenen Emblem anzugeben. In bevorzugten Ausführungen kann vorgesehen sein, dass das Emblem eine Abdeckung des Gassackmoduls bildet, die zur Freigabe eines innerhalb des Gassackmoduls angeordneten Gassacks aufklappbar oder entfernbar ist. Die Abdeckung kann einteilig oder zweiteilig ausgebildet sein. Insbesondere kann die Abdeckung eine einzige, gelenkig mit einem Gassackgehäuse gekoppelte Öffnungsklappe bilden. Alternativ kann die Abdeckung eine durchgehende Sollbruchlinie aufweisen, die die die Abdeckung in zwei Öffnungsklappen teilt, die jeweils gelenkig mit dem Gassackgehäuse gekoppelt sind. Ferner kann vorgesehen sein, dass das äußere Dekorationselement des Emblems einen Außenrand der Abdeckung und/oder Öffnungsklappe bildet. Mit anderen Worten kann vorgesehen sein, dass das Füllelement im Wesentlichen eine Platte bildet, die das Gassackmodul verschließt bzw. das Gassackgehäuse abdeckt. Die Platte kann gelenkig gelagert sein, um einen sich entfaltenden Gassack freizugeben. Um die Abdeckung des Gassackmoduls optisch ansprechend zu gestalten, kann vorgesehen sein, dass das äußere Dekorationselement den Außenrand der Abdeckung oder zumindest einer Öffnungsklappe bildet. Das innere Dekorationselement ist vorzugsweise zentriert innerhalb des Füllelements bzw. der Abdeckung angeordnet.

Ein weiterer nebengeordneter Aspekt der Erfindung betrifft ein Lenkrad, insbesondere für ein Landfahrzeug, das ein zuvor beschriebenes Gassackmodul und/oder Emblem aufweist. Das Gassackmodul kann insbesondere ein Fahrerairbagmodul bilden, das in das Lenkrad integriert ist. Vorzugsweise trägt das Fahrerairbagmodul eine Abdeckung, die das Emblem bildet.

Ein weiterer Aspekt betrifft ein Verfahren zum Herstellen eines zuvor beschriebenen Emblems. Das Verfahren umfasst die folgenden Schritte:
- Bereitstellen einer Dekorationseinheit mit Stegen, die das innere Dekorationselement und das äußere Dekorationselement miteinander verbinden, wobei die Dekorationseinheit einstückig ausgebildet ist;
- Bereitstellen eines Füllelements, dessen Form der Form eines Freiraums zwischen dem inneren Dekorationselement und dem äußeren Dekorationselement entspricht;
- Anordnen des Füllelements zwischen dem inneren Dekorationselement und dem äußeren Dekorationselement derart, dass die Stege an einer Rückseite des Füllelements anliegen; und
- Verbinden der Stege mit dem Füllelement durch Schweißen und/oder Kleben und/oder Clippen.

Das Verfahren ist besonders einfach und schnell durchführbar, so dass der Produktionsaufwand insgesamt verringert wird. Gerade in der Serienproduktion führt dies zu erheblichen Kostenvorteilen.

Die Erfindung wird im Folgenden anhand von Ausführungsbeispielen unter Bezugnahme auf die beigefügten, schematischen Zeichnungen, näher erläutert. Darin zeigen
- Fig. 1: Eine Draufsicht auf ein erfindungsgemäßes Emblem nach einem bevorzugten Ausführungsbeispiel, wobei das Emblem eine Abdeckung eines Gassackmoduls bildet;
- Fig. 2: Eine Rückansicht des Emblems gemäß Fig. 1;
- Fig. 3: Eine Rückansicht eines Füllelements des Emblems gemäß Fig. 1;
- Fig. 4: Eine Vorderansicht einer Dekorationseinheit des Emblems gemäß Fig. 1;
- Fig. 5: Eine Rückansicht des Emblems gemäß Fig. 1, wobei das Emblem eine einteilige Abdeckung eines Gassackmoduls bildet, das mit einem Halteband gekoppelt ist;
- Fig. 6: Eine Rückansicht eines als Abdeckung für ein Gassackmodul ausgebildeten erfindungsgemäßen Emblems nach einem bevorzugten Ausführungsbeispiel, wobei die Abdeckung eine Sollbruchlinie aufweist, die zwei Öffnungsklappen trennt; und
- Fig. 7: Eine Rückansicht des als Abdeckung ausgebildeten Emblems gemäß Fig. 6 in einem teilgeöffneten Zustand.

Die beigefügten Zeichnungen zeigen jeweils ein Emblem 1 für ein Gassackmodul. Das Emblem 1 weist vorzugsweise zwei separate Bauteile auf, die miteinander verbunden sind. Insbesondere umfasst das Emblem 1 eine Dekorationseinheit 10 und ein Füllelement 20. Die Dekorationseinheit 10 ist durch ein inneres Dekorationselement 11 und ein äußeres Dekorationselement 12 gebildet, das mit dem inneren Dekorationselement 11 über Stege 13 verbunden ist. Die gesamte Dekorationseinheit 10, also das innere Dekorationselement 11, das äußere Dekorationselement 12 und die Stege 13 sind vorzugsweise einstückig ausgebildet.

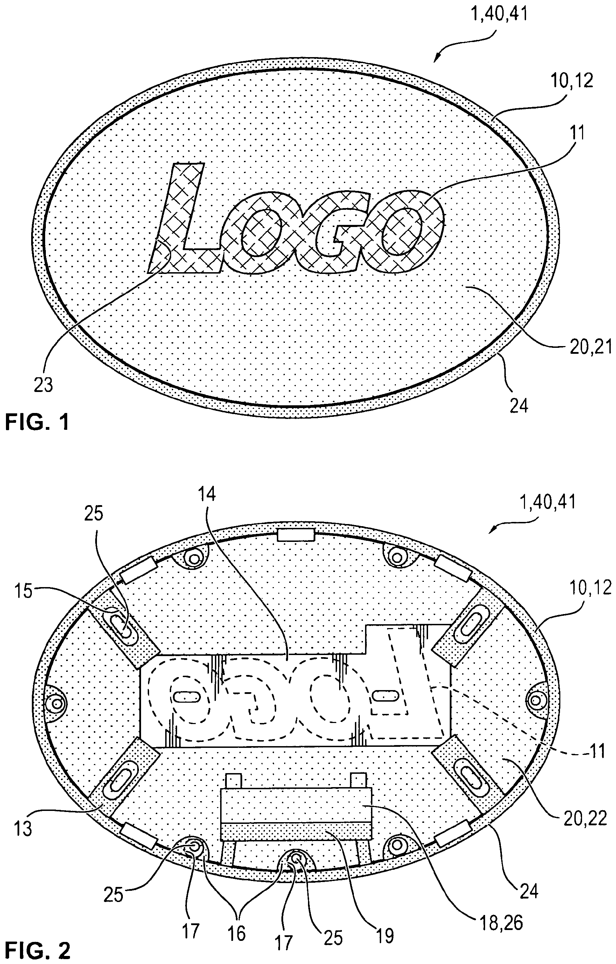

Wie in Fig. 1 gezeigt ist, ist auf einer Vorderseite des Emblems 1 das innere Dekorationselement 11 und das äußere Dekorationselement 12 erkennbar. Die Stege 13, die das innere Dekorationselement 11 mit dem äußeren Dekorationselement 12 verbinden, sind durch das Füllelement 20 verdeckt, das sich in einem Freiraum zwischen dem inneren Dekorationselement 11 und dem äußeren Dekorationselement 12 befindet. Insbesondere ist vorgesehen, dass das äußere Dekorationselement 12 einen Außenrand 24 des Füllelements 20 umgreift bzw. einen Außenrand 24 des Emblems 1 bildet.

Das Emblem 1 kann als separates Emblem vorgesehen sein, das mit einem Gassackmodul, insbesondere einer Abdeckung 40 eines Gassackmoduls verbindbar ist. Bevorzugt ist eine Variante der Erfindung, bei der das Emblem 1 die Abdeckung 40 des Gassackmoduls bildet. Mit anderen Worten kann das Emblem 1 als Abdeckung 40 mit einem Gassackgehäuse gelenkig verbunden sein, so dass das Emblem 1 selbst einen Aufnahmeraum für einen Gassack innerhalb des Gassackmoduls begrenzt bzw. verschließt. Zum Freigeben des Gassacks kann das Emblem 1 bzw. die Abdeckung 40 wegklappbar oder entfernbar sein.

In der Rückansicht gemäß Fig. 2 ist der Verlauf der Stege 13 der Dekorationseinheit 10 gut erkennbar. Das äußere Dekorationselement 12 weist eine im Wesentlichen ovale Form auf und bildet den Außenrand der Abdeckung 40. Von dem äußeren Dekorationselement 12 erstrecken sich vier Stege 13 zum inneren Dekorationselement 11, das zentriert innerhalb des äußeren Dekorationselements 12 angeordnet ist. Das innere Dekorationselement 11 kann auf einer Halteplatte 14 angeordnet sein, die unmittelbar mit den Stegen 13 gekoppelt ist. Die Halteplatte 14 ist vorzugsweise an einer Rückseite 22 des Füllelements 20 angeordnet. Ebenfalls sind die Stege 13 an der Rückseite 22 des Füllelements 20 angeordnet.

Gut erkennbar sind in Fig. 2 Langlöcher 15 in den Stegen 13, die zur Verbindung der Dekorationseinheit 10 mit dem Füllelement 20 dienen. Insbesondere kann das Füllelement 20 über die Rückseite 22 vorstehende Vorsprünge 25 aufweisen, die sich durch die Langlöcher 15 erstrecken und durch Erhitzen verformt werden, so dass eine formschlüssige Verbindung zwischen den Stegen 13 und dem Füllelement 20 bewirkt wird. Alternativ können am Füllelement 20 Klippverbindungselemente vorgesehen sein, die mit den Langlöchern 15 zur Befestigung der Dekorationseinheit 10 am Füllelement 20 zusammenwirken. In weiteren Varianten kann vorgesehen sein, die Stege 13 mit dem Füllelement 20 durch Schweißen zu verbinden.

Ferner ist in Fig. 2 erkennbar, dass das äußere Dekorationselement 12 nach innen ragende Befestigungsfortsätze 16 aufweist. Die Befestigungsfortsätze 16 liegen vorzugsweise an der Rückseite 22 des Füllelements 20 an und umfassen jeweils eine Bohrung 17. In die Bohrung 17 können sich weitere Vorsprünge 25 des Füllelements 20 erstrecken, die zur formschlüssigen Fixierung aufgeschmolzen werden. Damit wird eine verbesserte Fixierung der Dekorationseinheit 10 am Füllelement 20 erreicht.

Schließlich ist in Fig. 2 noch eine Halteschlaufenaufnahme 18 erkennbar, die das Durchführen einer Halteschlaufe ermöglicht, um das Emblem 1 bzw. die Abdeckung 40 an einem Gassackgehäuse zu halten, wenn die Abdeckung 40 zur Freigabe des Gassacks geöffnet wird.

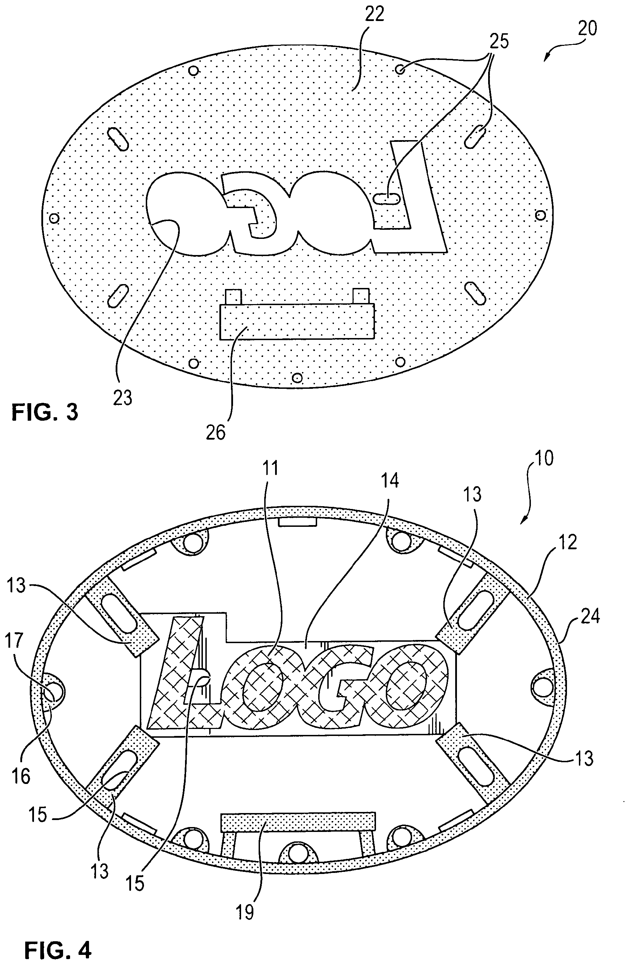

Fig. 3 zeigt das Füllelement 20, wobei gut erkennbar ist, dass das Füllelement 20 eine Aussparung 23 aufweist. Die Aussparung 23 ist im Wesentlichen zentral im Füllelement 20 angeordnet. Die Form der Aussparung 23 entspricht der Form des inneren Dekorationselements 11, so dass das innere Dekorationselement 11 passgenau in die Aussparung 23 einsetzbar ist. Fig. 3 zeigt das Füllelement 20 in einer Rückansicht. Erkennbar sind auf der Rückseite 22 des Füllelements 20 auch die Vorsprünge 25, die zur Befestigung der Dekorationseinheit 10 dienen.

Die Dekorationseinheit ist in freigestellter Form in Fig. 4 gezeigt. Fig. 4 zeigt dabei eine Vorderansicht der Dekorationseinheit 10. Es ist erkennbar, dass die Dekorationseinheit 10 einen äußeren ovalen Dekorationsring aufweist, der das äußere Dekorationselement 12 bildet. Das äußere Dekorationselement 12 ist über die Stege 13 mit der Halteplatte 14 verbunden, die das innere Dekorationselement 11 trägt. Es ist vorgesehen, dass das innere Dekorationselement 11 eine Höhe aufweist, die im Wesentlichen der Stärke des Füllelements 20 entspricht. Mit anderen Worten kann das Füllelement 20 als Platte ausgebildet sein, wobei das innere Dekorationselement 11 eine Höhe aufweist, die der Plattenstärke des Füllelements 20 entspricht. Damit wird erreicht, dass sich das innere Dekorationselement 11 durch die Aussparung 23 des Füllelements 20 erstreckt und im Wesentlichen flächenbündig oder sich erhebend über die Vorderseite 21 des Füllelements 20 angeordnet ist.

In Fig. 4 ist außerdem erkennbar, dass auch die Halteplatte 14 Langlöcher 15 aufweisen kann, in die Vorsprünge 25 des Füllelements 20 eingreifen können. Dies verbessert die Fixierung der Dekorationseinheit 10 am Füllelement 20. Am äußeren Dekorationselement 12 ist ein erstes Brückenelement 19 angeordnet. Das erste Brückenelement 19 ist vorzugsweise einstückig mit dem äußeren Dekorationselement 12 ausgebildet. Gemeinsam mit einem zweiten Brückenelement 26, das am Füllelement 20 ausgebildet, insbesondere mit dem Füllelement 20 einstückig verbunden, ist, bildet das erste Brückenelement 19 die Haltebandaufnahme 18 des Emblems 1 bzw. der Abdeckung 40.

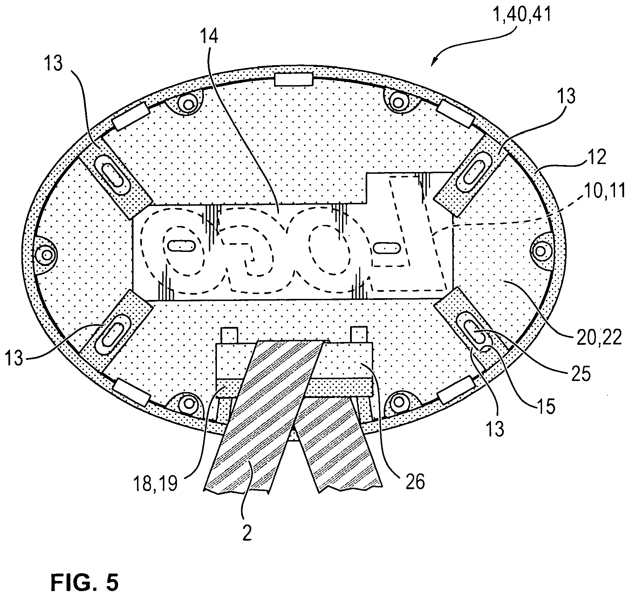

Fig. 5 zeigt nochmals eine Rückansicht des Emblems gemäß Fig. 2, wobei verdeutlicht ist, wie die Haltebandaufnahme 18 ein Halteband 2 aufnimmt. Das Halteband 2 wird vorzugsweise zwischen der Rückseite 22 des Füllelements 20 und den Brückenelementen 19, 26 hindurchgeschlauft. Das Halteband 2 kann mit einem Gassackgehäuse des Gassackmoduls ebenfalls verbunden sein, so dass beim Öffnen der Abdeckung 40 diese durch das Halteband 2 weiterhin mit dem Gassackgehäuse gekoppelt ist. So wird vermieden, dass sich die Abdeckung 40 bzw. das Emblem 1 bei Auslösung des Gassacks frei durch einen Fahrzeuginnenraum bewegt.

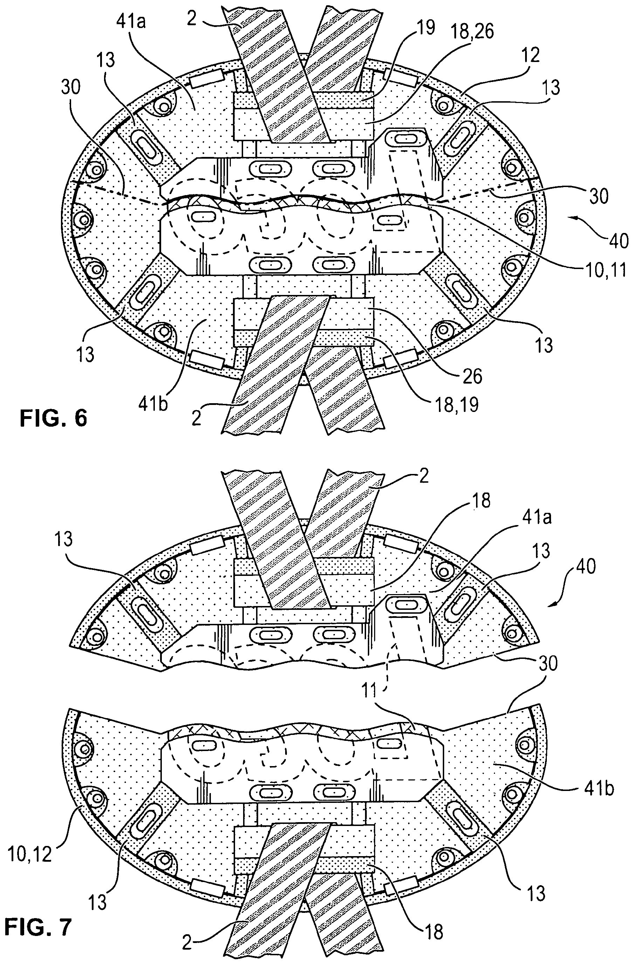

Bei dem Ausführungsbeispiel gemäß Fig. 1-5 ist das Emblem 1 als Abdeckung 40 ausgebildet, die wiederum eine einzige Öffnungsklappe 41 bildet. Die Öffnungsklappe 41 verschließt einen Aufnahmeraum für einen Gassack innerhalb des Gassackmoduls und wird zur Freigabe des Gassacks einstückig aufgeklappt oder anderweitig entfernt. Die Fig. 6 und 7 zeigen ein alternatives Ausführungsbeispiel, bei dem die Abdeckung 40 eine Sollbruchlinie 30 aufweist, die die Abdeckung 40 in zwei Öffnungsklappen 41a, 41b unterteilt. Die Sollbruchlinie 30 ist vorzugsweise durch eine Materialschwächung gebildet. Die Sollbruchlinie 30 erstreckt sich durch das Füllelement 20 und die Dekorationseinheit 10. Insbesondere weisen das äußere Dekorationselement 12 und das innere Dekorationselement 11 jeweils Sollbruchlinien 30 auf, die mit den Sollbruchlinien des Füllelements 20 fluchten. Auf diese Weise ergibt sich eine durchgehende Sollbruchlinie 30, die sich durch das gesamte Emblem 1 erstreckt. In Fig. 6 ist erkennbar, dass die Halteplatte 14 des inneren Dekorationselements 11 zweigeteilt ist, wobei die Sollbruchlinie 30 zwischen den beiden Teilen der Halteplatte 14 hindurch verläuft.

Die Abdeckung 40 wird durch die Sollbruchlinie 30 in eine obere Öffnungsklappe 41a und eine untere Öffnungsklappe 41b unterteilt. Die obere Öffnungsklappe 41a und die untere Öffnungsklappe 41b weisen jeweils eine eigene Haltebandaufnahme 18 auf. Mit anderen Worten sind sowohl am Füllelement 20, als auch am äußeren Dekorationselement 12 jeweils zwei Brückenelemente 19, 26 vorgesehen, die gemeinsam jeweils eine Haltebandaufnahme 18 bilden. Jeder Öffnungsklappe 41 ist eine Haltebandaufnahme 18 zugeordnet.

Das hier beschriebene Emblem 1 ermöglicht eine einfache und vielfältige Gestaltung von Abdeckungen 40 für Gassackmodule. Beispielsweise kann vorgesehen sein, dass das innere Dekorationselement 11 und das äußere Dekorationselement 12 sich in ihrer Farbgebung unterscheiden. So kann das innere Dekorationselement 11 beispielsweise eine andere Lackierung und/oder Beschichtung als das äußere Dekorationselement 12 aufweisen. Die Lackierung und/oder Beschichtung kann sich anhand der Farbe, der Oberflächenstruktur und/oder des Deckungsgrads unterscheiden. Es ist auch möglich, dass eines der beiden Dekorationselemente 11, 12 eine Beschichtung und/oder Lackierung aufweist, wogegen das andere Dekorationselement 12, 11 keine Beschichtung und/oder Lackierung umfasst. Eines der Dekorationselemente 11, 12 kann auch beschichtet und das andere Dekorationselement 12, 11 lackiert sein. Mit anderen Worten kann sich das Erscheinungsbild des inneren Dekorationselements 11 und des äußeren Dekorationselements 12 voneinander unterscheiden.

Eine unterschiedliche Farbgebung für die Dekorationselemente 11, 12 ist einfach möglich, da beispielsweise das innere Dekorationselement 11 und das äußere Dekorationselement 12 einfach durch Sprühlackieren mit unterschiedlichen Farben gestaltet werden können. Zwar können dabei auch die Stege 13 mit den jeweiligen Lacken versehen sein, wobei die Abgrenzung zwischen den beiden unterschiedlich farbigen Lacken an den Stegen 13 unregelmäßig ist. Dies ist insofern unschädlich, da die Stege 13 im montierten Zustand des Emblems 1 für einen Fahrzeuginsassen nicht sichtbar sind.

Jedenfalls ist vorgesehen, dass sich das Füllelement 20 von der Farbgebung der Dekorationseinheit 10 unterscheidet. Das Füllelement 20 kann sich von der Dekorationseinheit 10, insbesondere von dem inneren Dekorationselement 11 und/oder dem äußeren Dekorationselement 12, einerseits farblich, andererseits auch im Hinblick auf eine Oberflächenstruktur bzw. allgemein hinsichtlich des verwendeten Materials unterscheiden. So kann das Füllelement 20 beispielsweise eine strukturierte Kunststoffoberfläche aufweisen. Das äußere Dekorationselement 12 und/oder das innere Dekorationselement 11 können hingegen eine Chrom-Beschichtung umfassen.

Hinsichtlich der Formgebung des äußeren Dekorationselements 12 sind unterschiedliche Varianten denkbar. In den beigefügten Zeichnungen ist das äußere Dekorationselement 12 als ovaler Ring gezeigt. Es ist allerdings auch möglich, dass das äußere Dekorationselement rechteckig oder U-förmig ausgebildet ist. Ferner kann vorgesehen sein, dass das äußere Dekorationselement 12 nicht nur den Außenrand des Füllelements 20 umschließt, sondern auch entlang der Sollbruchlinie 30 angeordnet ist. Mit anderen Worten kann das äußere Dekorationselement 12 den Außenrand einer Öffnungsklappe 41, 41a, 41b bilden.

### Bezugszeichenliste

- 1: Emblem
- 2: Halteband
- 10: Dekorationseinheit
- 11: Inneres Dekorationselement
- 12: Äußeres Dekorationselement
- 13: Steg
- 14: Halteplatte
- 15: Langloch
- 16: Befestigungsfortsatz
- 17: Bohrung
- 18: Haltebandaufnahme
- 19: Erstes Brückenelement
- 20: Füllelement
- 21: Vorderseite
- 22: Rückseite
- 23: Aussparung
- 24: Außenrand
- 25: Vorsprung
- 26: Zweites Brückenelement
- 30: Sollbruchlinie
- 40: Abdeckung
- 41: Öffnungsklappe
- 41a: Obere Öffnungsklappe
- 41b: Untere Öffnungsklappe

## Patentansprüche

1. Emblem (1) für ein Gassackmodul mit einem inneren Dekorationselement (11) und einem äußeren Dekorationselement (12), das mit dem inneren Dekorationselement (11) über Stege (13) verbunden ist, wobei das innere Dekorationselement (11) und das äußere Dekorationselement (12) in einem montierten Zustand am Gassackmodul sichtbar sind,
**dadurch gekennzeichnet, dass**
wenigstens zwischen dem inneren Dekorationselement (11) und dem äußeren Dekorationselement (12) ein Füllelement (20) angeordnet ist, das die Stege (13) verdeckt.

2. Emblem (1) nach Anspruch 1,
**dadurch gekennzeichnet, dass**
das Füllelement (20) eine Vorderseite (21) und eine Rückseite (22) aufweist, wobei die Vorderseite (21) im montierten Zustand am Gassackmodul sichtbar ist und die Stege (13) entlang der Rückseite (22) verlaufen.

3. Emblem (1) nach Anspruch 1 oder 2,
**dadurch gekennzeichnet, dass**
das Füllelement (20) wenigstens eine Aussparung (23) aufweist, in der das innere Dekorationselement (11) angeordnet ist, wobei die Aussparung (23) einem Negativprofil des inneren Dekorationselements (11) entspricht.

4. Emblem (1) nach einem der vorhergehenden Ansprüche,
**dadurch gekennzeichnet, dass**
sich das äußere Dekorationselement (22) entlang eines Außenrands (24) des Füllelements (20) erstreckt.

5. Emblem (1) nach einem der vorhergehenden Ansprüche,
**dadurch gekennzeichnet, dass**
das innere Dekorationselement (11) eine andere Farbe und/oder Lackierung und/oder Beschichtung als das äußere Dekorationselement (12) aufweist.

6. Emblem (1) nach einem der vorhergehenden Ansprüche,
**dadurch gekennzeichnet, dass**
das innere Dekorationselement (11), das äußere Dekorationselement (12) und die Stege (13) einstückig miteinander ausgebildet sind.

7. Emblem (1) nach einem der vorhergehenden Ansprüche,
**dadurch gekennzeichnet, dass**
die Stege (13) mit dem Füllelement (20) verbunden, insbesondere schweißverbunden oder klippverbunden sind.

8. Emblem (1) nach einem der vorhergehenden Ansprüche,
**gekennzeichnet durch**
wenigstens eine Sollbruchlinie (30), die sich **durch** das Füllelement und wenigstens das äußere Dekorationselement erstreckt.

9. Emblem (1) nach einem der vorhergehenden Ansprüche,
**dadurch gekennzeichnet, dass**
das Emblem (1) mit einer Abdeckung (40) eines Gassackmoduls verbindbar ist oder eine Abdeckung (40) eines Gassackmoduls bildet.

10. Gassackmodul, insbesondere Fahrerairbagmodul, mit einem Emblem (1) nach einem der vorhergehenden Ansprüche.

11. Gassackmodul nach Anspruch 10,
**dadurch gekennzeichnet, dass**
das Emblem (1) eine Abdeckung (40) des Gassackmoduls bildet, die zur Freigabe eines innerhalb des Gassackmoduls angeordneten Gassacks aufklappbar oder entfernbar ist.

12. Gassackmodul nach Anspruch 11,
**dadurch gekennzeichnet, dass**
die Abdeckung (40) eine einzige, gelenkig mit einem Gassackgehäuse gekoppelte Öffnungsklappe (41) bildet oder eine durchgehende Sollbruchlinie (30) aufweist, die die Abdeckung (40) in zwei Öffnungsklappen (41a, 41b) teilt, die jeweils gelenkig mit dem Gassackgehäuse gekoppelt sind.

13. Gassackmodul nach Anspruch 11 oder 12,
**dadurch gekennzeichnet, dass**
das äußere Dekorationselement (12) einen Außenrand (24) der Abdeckung (40) und/oder der Öffnungsklappe (41, 41a, 41b) bildet.

14. Lenkrad, insbesondere für ein Landfahrzeug, mit einem Gassackmodul und/oder einem Emblem (1) nach einem der vorhergehenden Ansprüche.

## Claims

1. An emblem (1) for an airbag module comprising an inner decoration element (11) and an outer decoration element (12) connected to the inner decoration element (11) via webs (13), the inner decoration element (11) and the outer decoration element (12) being visible at the airbag module in a mounted state,
**characterized in that**
at least between the inner decoration element (11) and the outer decoration element (12) a filling element (20) concealing the webs (13) is arranged.

2. The emblem (1) according to claim 1,
**characterized in that**
the filling element (20) has a front side (21) and a rear side (22), the front side (21) being visible at the airbag module in the mounted state and the webs (13) extending along the rear side (22).

3. The emblem (1) according to claim 1 or 2,
**characterized in that**
the filling element (20) includes at least one recess (23) in which the inner decoration element (11) is arranged, the recess (23) corresponding to a negative profile of the inner decoration element (11).

4. The emblem (1) according to any one of the preceding claims,
**characterized in that**
the outer decoration element (22) extends along an outer edge (24) of the filling element (20).

5. The emblem (1) according to any one of the preceding claims,
**characterized in that**
the inner decoration element (11) has a color and/or paint and/or coating different from the outer decoration element (12).

6. The emblem (1) according to any one of the preceding claims,
**characterized in that**
the inner decoration element (11), the outer decoration element (12) and the webs (13) are formed in one piece.

7. The emblem (1) according to any one of the preceding claims,
**characterized in that**
the webs (13) are connected, especially connected by welding or clipping, to the filling element (20).

8. The emblem (1) according to any one of the preceding claims,
**characterized by**
at least one predetermined breaking line (30) which extends through the filling element and at least the outer decoration element.

9. The emblem (1) according to any one of the preceding claims,
**characterized in that**
the emblem (1) is connectable to a cover (40) of an airbag module or forms a cover (40) of an airbag module.

10. An airbag module, especially a driver airbag module, comprising an emblem (1) according to any one of the preceding claims.

11. The airbag module according to claim 10,
**characterized in that**
the emblem (1) forms a cover (40) of the airbag module adapted to be hinged open or removed for release of an airbag arranged inside the airbag module.

12. The airbag module according to claim 11,
**characterized in that**
the cover (40) forms a single opening flap (41) hinged to an airbag housing or includes a continuous predetermined breaking line (30) dividing the cover (40) into two opening flaps (41a, 41b) each of which is hinged to the airbag housing.

13. The airbag module according to claim 11 or 12,
**characterized in that**
the outer decoration element (12) forms an outer edge (24) of the cover (40) and/or of the opening flap (41, 41a, 41b).

14. A steering wheel, especially for a ground vehicle, comprising an airbag module and/or an emblem (1) according to any one of the preceding claims.

## Revendications

1. Emblème (1) pour un module airbag comportant un élément intérieur de décoration (11) et un élément extérieur de décoration (12) relié à l'élément intérieur de décoration (11) par des pattes (13), pour lequel l'élément intérieur de décoration (11) et l'élément extérieur de décoration (12) sont visibles à l'état assemblé sur le module airbag, **caractérisé en ce qu** 'au moins un élément de remplissage (20), que les pattes (13) recouvrent, est disposé entre l'élément intérieur de décoration (11) et l'élément extérieur de décoration (12).

2. Emblème (1) selon la revendication 1, **caractérisé en ce que** l'élément de remplissage (20) comporte un côté avant (21) et un côté arrière (22), pour lequel le côté avant (21) est visible à l'état assemblé sur le module airbag et les pattes (13) courent tout le long du côté arrière (22).

3. Emblème (1) selon la revendication 1 ou 2, **caractérisé en ce que** l'élément de remplissage (20) présente au moins un évidement (23), dans lequel est disposé l'élément intérieur de décoration (11), pour lequel l'évidement (23) correspond à un profil en négatif de l'élément intérieur de décoration (11).

4. Emblème (1) selon l'une quelconque des revendications précédentes, **caractérisé en ce que** l'élément extérieur de décoration (22) s'étend le long d'un bord extérieur (24) de l'élément de remplissage (20).

5. Emblème (1) selon l'une quelconque des revendications précédentes, **caractérisé en ce que** l'élément intérieur de décoration (11) a une couleur et/ou une peinture et/ou un revêtement différent de l'élément extérieur de décoration (12).

6. Emblème (1) selon l'une quelconque des revendications précédentes, **caractérisé en ce que** l'élément intérieur de décoration (11), l'élément extérieur de décoration (12) et les pattes (13) sont formés d'une seule pièce les uns avec les autres.

7. Emblème (1) selon l'une quelconque des revendications précédentes, **caractérisé en ce que** les pattes (13) reliées à l'élément de remplissage (20), le sont notamment par soudage ou clipsage.

8. Emblème (1) selon l'une quelconque des revendications précédentes, **caractérisé par** au moins une ligne de rupture prédéterminée (30) qui s'étend à travers l'élément de remplissage et au moins l'élément extérieur de décoration.

9. Emblème (1) selon l'une quelconque des revendications précédentes, **caractérisé en ce que** l'emblème (1) est connectable avec un couvercle (40) d'un module airbag ou forme un couvercle (40) d'un module airbag.

10. Module airbag, notamment un module airbag de conducteur, avec un emblème (1) selon l'une des revendications précédentes.

11. Module airbag selon la revendication 10, **caractérisé en ce que** l'emblème (1) forme un couvercle (40) de module airbag, qui peut être ouvert ou relâché pour libérer un sac gonflable disposé à l'intérieur du module airbag.

12. Module airbag selon la revendication 11, **caractérisé en ce que** le couvercle (40) forme un unique, volet d'ouverture (41) accouplé pivotant avec un boîtier d'airbag ou possède une ligne de rupture prédéterminée continue (30), qui ouvre le couvercle (40) en deux volets d'ouverture (41a, 41b), qui sont chacun accouplés en liaison pivot au boîtier d'airbag.

13. Module airbag selon la revendication 11 ou 12, **caractérisé en ce que** l'élément extérieur de décoration (12) forme un bord externe (24) du couvercle (40) et/ou du volet d'ouverture (41, 41a, 41b).

14. Volant, en particulier pour véhicule terrestre, avec un module airbag et/ou un emblème (1) selon l'une quelconque des revendications précédentes.
